# EUROPÄISCHE PATENTSCHRIFT

(11) **EP 0 941 174 B1**
(45) Veröffentlichungstag und Bekanntmachung des Hinweises auf die Patenterteilung: **27.03.2002**
(21) Anmeldenummer: 97946700.8
(22) Anmeldetag: 03.12.1997
(51) Int. Cl.: B60P 1/64

(54) **VERLADEVORRICHTUNG FÜR CONTAINER OD. DGL.**
LOADING DEVICE FOR CONTAINERS OR SIMILAR
DISPOSITIF DE CHARGEMENT POUR CONTENEURS OU SIMILAIRE

(30) Priorität: 03.12.1996 AT 209796D
(43) Veröffentlichungstag der Anmeldung: 15.09.1999
(73) Patentinhaber: WINTER, Udo, 4020 Linz (AT); SCHABELREITER, Johann, 8132 Pernegg (AT); MARTIN, Werner, 8045 Graz (AT); Wunder, Johannes, 3224 Mitterbach (AT)
(72) Erfinder: WINTER, Udo, 4020 Linz (AT); SCHABELREITER, Johann, 8132 Pernegg (AT); MARTIN, Werner, 8045 Graz (AT); Wunder, Johannes, 3224 Mitterbach (AT)
(74) Vertreter: Hübscher, Helmut, Dipl.-Ing.
(86) Internationale Anmeldenummer: AT9700265
(87) Internationale Veröffentlichungsnummer: WO9824655

(56) Entgegenhaltungen:
- WO-A-95/00357
- US-A- 3 513 997

## Beschreibung

Die Erfindung bezieht sich auf eine Verladevorrichtung für Container od. dgl. mit einem Paar auf einem Fahrgestell aufbaubarer Ladeeinheiten, die jeweils eine um eine gemeinsame, in Längsmitte des Fahrgestells verlaufende Schwenkachse schwenkverstellbar an einer Konsole abgestützte Teleskopsäule aus einem an der Konsole angelenkten Unterteil, einem im Unterteil verschiebbar geführten Oberteil und einem den Oberteil gegenüber dem Unterteil schiebeverstellbaren Säulenzylinder aufweisen, wobei beidseits am Unterteil Stellzylinder angreifen und der Oberteil einen um eine zur Teleskopsäulenschwenkachse parallele Schwenkachse nach beiden Seiten schwenkverstellbaren Auslegerarm mit einem Widerlager zum Anschluß eines Lastaufnahmemittels aufnimmt.

Eine solche Verladevorrichtung ist beispielsweise aus der EP 0 705 179 A bekannt und sie hat sich auch durchaus wegen ihres verhältnismäßig einfachen und kompakten Aufbaues, ihrer Robustheit und ihres im Vergleich zum Verladebereich geringen Platzbedarfes bewährt. Allerdings läßt sich bei der bekannten Verladevorrichtung der Auslegerarm der Teleskopsäulen nur lastfrei von einer Seite auf die andere umschwenken, so daß ein Ladevorgang, bei dem ein Container von einer Fahrgestellseite zur anderen bewegt werden soll, ein Abstellen des Containers auf dem Fahrgestell zum Entlasten und Umschwenken des Auslegerarms erfordert, was zeitraubend und umständlich ist. Außerdem kann der Auslegerarm unter Last nur in seiner anschlagbegrenzten Seitenschwenklage eingesetzt werden, womit eine gewisse Einschränkung der Lademöglichkeiten verbunden ist.

Der Erfindung liegt daher die Aufgabe zugrunde, eine Verladevorrichtung der eingangs geschilderten Art zu schaffen, die ein Durchschwenken von Containem von der einen auf die andere Fahrgestellseite erlaubt und durch ein Schwenkverstellen der Auslegerarme auch unter Last eine Erweiterung des Verladebereiches und die Voraussetzung für ein Stapeln der Container mit sich bringt.

Die Erfindung löst diese Aufgabe dadurch, daß der Oberteil der Teleskopsäule einen Säulenkopf trägt, der eine schlitzförmige Schwenkführung mit den Schwenkbereich beidseits begrenzenden Kurvenbahnen für den Auslegerarm bildet, daß der Auslegerarm den Kurvenbahnen zugeordnete Führungsglieder aufweist und mit einem Gleitstück gelenkig verbunden ist, das verschiebbar innerhalb des zur Schwenkführung des Säulenkopfes hin offen ausmündenden Oberteils sitzt, wobei im Mündungsbereich eine Engstelle zwischen den Kurvenbahnen zum gleichzeitigen Anliegen der Führungsglieder des in einer zur Teleskopsäule gestreckten Lage ausgerichteten Auslegerarms an beiden Kurvenbahnen vorgesehen ist, und daß der Säulenzylinder oberteilseitig am anschlagbegrenzt hochschiebbaren Gleitstück angreift.

Die Stellzylinder können die Teleskopsäule in üblicher Weise um die gemeinsame, in Längsmitte des Fahrgestells verlaufende Schwenkachse nach beiden Seiten verschwenken, wobei unabhängig von der jeweiligen Schwenklage der Säulenzylinder innerhalb der Teleskopsäule nach beiden Richtungen betätigbar bleibt. Ist der Säulenzylinder in seine Ausgangsposition eingefahren, hat er einerseits den Oberteil in seine unterste Stellung gebracht und anderseits über das Gleitstück den Auslegerarm in den Oberteil eingezogen, wodurch der sich mit den Führungsgliedern entlang der Kurvenbahnen bewegende Auslegerarm fluchtend zur Teleskopsäule ausgerichtet ist. Beim Ausfahren des Säulenzylinders wird das Gleitstück hochgeschoben, womit der Auslegerarm entsprechend der Schwenklage der Teleskopsäule beim Hochfahren nach der einen oder anderen Seite hin entsprechend der die Führungsglieder führenden Kurvenbahn ausschwenkt und auf die betreffende Seite umklappt. Ist die Seitenschwenkgrenze durch das Anstehen des Gleitstückes am Endanschlag erreicht, wird bei weiterem Ausfahren des Säulenzylinders über das Gleitstück der Oberteil von seiner Grundposition heraus angehoben und läßt sich bis in eine gewünschte Ausfahrstellung gegenüber dem Unterteil hochschieben. Zusammen mit den Seitenschwenkmöglichkeiten der Teleskopsäule selbst ergeben sich so die unterschiedlichen Verlademöglichkeiten, wobei die Bewegungen der Teleskopsäule und auch des Auslegerarms auf Grund des entsprechend stark dimensionierten Säulenzylinders schwierigkeitslos auch unter Last erfolgen können. Damit bietet sich auch die einfache Möglichkeit, beispielsweise einen auf der einen Seite des Fahrgestells stehenden Container aufzunehmen, dann hochzuheben und auf die andere Fahrgestellseite zu schwenken und hier wieder abzusenken und abzustellen oder einen Container von der Ladefläche eines benachbarten Fahrzeuges auf die gegenüberliegende Fahrgestellseite zu bringen u. dgl..

Damit der Auslegerarm einwandfrei mittels des Säulenzylinders schwenkverstellbar ist, muß der Oberteil der Teleskopsäule gegenüber dem Unterteil verschiebefest abgestützt sein, welche Abstützung von vornherein in eingezogener Teleskopposition gegeben ist. Um eine Schwenkverstellung des Auslegerarms auch in verschiedenen Ausfahrpositionen der Teleskopsäule vornehmen zu können, ist der Unterteil der Teleskopsäule mit einer Verriegelungsvorrichtung zum wahlweisen Verriegeln des Oberteils in ein oder mehreren Ausfahrstellungen ausgerüstet, so daß die Umschwenkhöhe des Auslegerarms und damit auch die Verladehöhe der Container wunschgemäß gewählt werden kann. Mit einer solchen vorbestimmbaren Arbeitshöhe der Teleskopsäule bzw. des Auslegerarms ist es nun auch möglich, Container so hoch anzuheben und seitlich zu verschwenken, daß ein Container auf eine entsprechend hohe Rampe, eine Ladefläche eines Fahrzeuges, aber auch zum Stapeln auf einen bereits abgestellten Container abgeladen bzw. von einem entsprechend hohen Abstellplatz aufgenommen werden kann.

Als Führungsglieder für den Auslegerarm könnten geeignete Gleitflächen od. dgl. vorgesehen sein, doch besitzt zweckmäßigerweise der Auslegerarm als Führungsglied eine um eine zur Auslegerarmschwenkachse parallele Drehachse drehbar gelagerte Führungsrolle, die einen an die Engstelle zwischen den Kurvenbahnen angepaßten Durchmesser besitzt. Eine solche Führungsrolle erlaubt ein leichtgängiges, geräuscharmes Relativbewegen zwischen Auslegerarm und Säulenkopf und gewährleistet auch eine exakte Führung des Auslegerarmes beim Verschwenken wie beim fluchtenden Ausrichten im Engstellenbereich.

Um zu verhindern, daß bei einem Verschwenken der Teleskopsäule während der Säulenzylinderbetätigung ein ungewolltes Umschlagen des Auslegerarms von einer Schwenkseite zur anderen erfolgt, was bei höherer Belastung zu einer Beschädigung der Verladevorrichtung führen könnte, ließe sich die Auslegerarmbewegung entlang einer entsprechenden Kulissenführung zwangsweise steuern, womit aber die Gefahr von Klemmungen u. dgl. verbunden wäre. Zweckmäßiger ist es daher, wenn der Auslegerarm mit einem einem Sperransatz des Säulenkopfes zugeordneten Sperriegel als Umschlagsicherung ausgestattet ist, welcher Sperriegel bei einem Hochschwenken des Auslegerarms vor dem Erreichen der Strecklage am Sperransatz anschlägt und eine Weiterbewegung verhindert. Erst wenn eine bewußte Entriegelung erfolgt, läßt sich die Sperre aufheben und das Umschwenken vornehmen.

Ist nach einer weiteren Ausgestaltung der Erfindung die Teleskopsäule samt den Stellzylindern auf einem quer zur Schwenkachse schiebeverstellbaren Schlitten der Konsole aufgesetzt, kann durch diese Querverstellbarkeit der Verladebereich seitlich weiter ausgedehnt werden und es kommt zu einer Vergrößerung der Einsatzmöglichkeiten für die Verladevorrichtung.

Zweckmäßig ist es auch, wenn erfindungsgemäß die Konsole einen um eine liegende Querachse umklappbaren Oberbau aufweist, der die Teleskopsäule samt den Stellzylindern trägt, wodurch die üblicherweise über die Fahrerkabine hinausragenden Teile der Verladevorrichtung für einen Bahntransport od. dgl. im unbeladenen Zustand zur Verringerung der Transporthöhe umklappbar sind.

In der Zeichnung ist der Erfindungsgegenstand beispielsweise veranschaulicht, und zwar zeigen
- Fig. 1: ein Fahrzeug mit erfindungsgemäßer Verladevorrichtung in verschiedenen Ladestellungen an Hand einer Rückansicht,
- Fig. 2: ein Fahrzeug mit erfindungsgemäßer Verladevorrichtung in Seitenansicht,
- Fig. 3: eine Teleskopsäule der Verladevorrichtung in teilgeschnittener Rückansicht größeren Maßstabes,

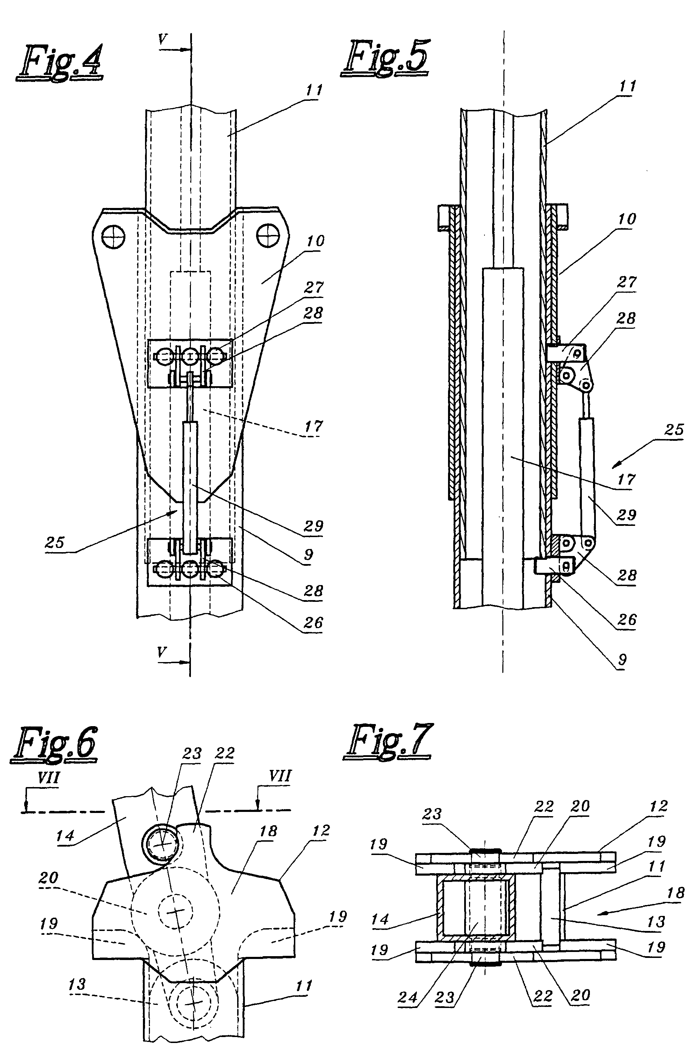

- Fig. 4 und 5: die Verriegelungsvorrichtung der Teleskopsäule in Draufsicht bzw. im Querschnitt nach der Linie V-V der Fig. 4 sowie
- Fig. 6 und 7: den Säulenkopf der Teleskopsäule in Rückansicht bzw. im Querschnitt nach der Linie VII-VII der Fig. 6 ebenfalls größeren Maßstabes.

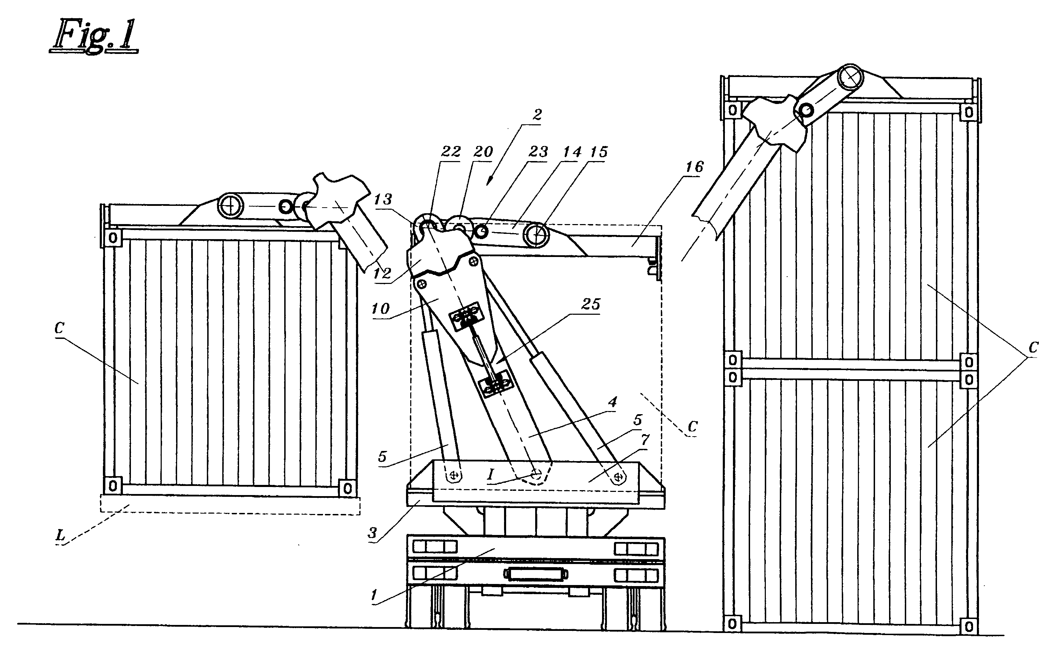

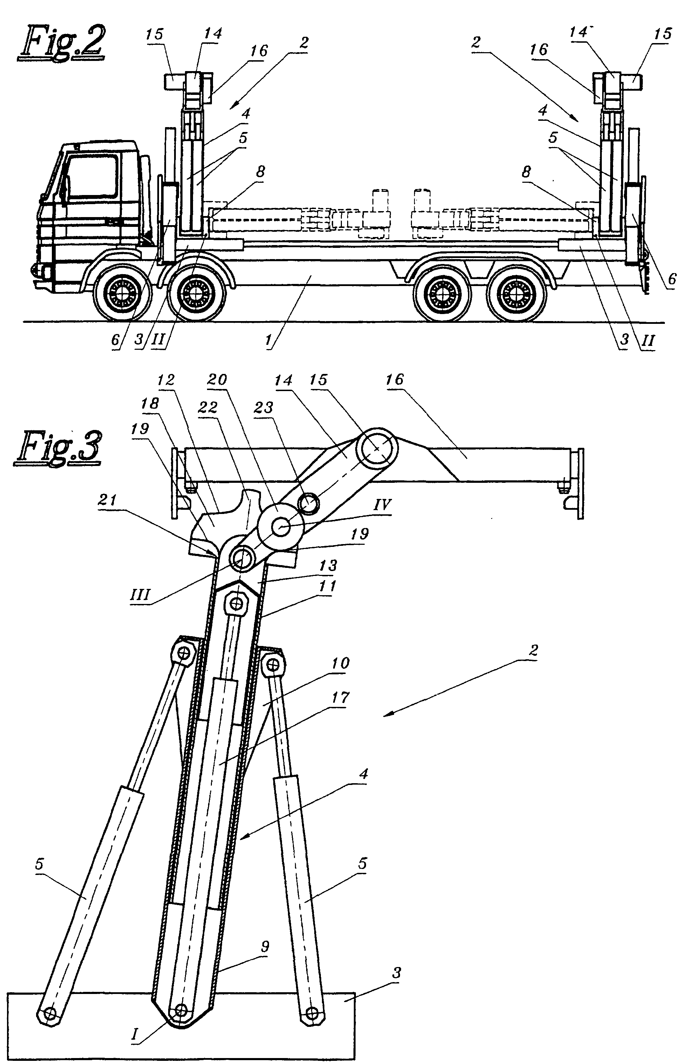

Auf einem Fahrgestell 1, beispielsweise einem Lastkraftwagen, ist eine Verladevorrichtung für Container C mit zwei Ladeeinheiten 2 aufgebaut, wobei jede Ladeeinheit 2 aus einer Konsole 3, einer auf der Konsole 3 um eine in Längsmitte des Fahrgestells 1 verlaufende Schwenkachse I schwenkbar abgestützte Teleskopsäule 4 mit beidseits angreifenden Stellzylindern 5 sowie aus, der Übersichtlichkeit halber nur in Fig. 2 angedeuteten, nach beiden Seiten hin abschwenkbaren Stützfüßen 6 besteht. Wie in Fig. 1 dargestellt, kann die Konsole 3 zur Aufnahme der Teleskopsäule 4 und der Stellzylinder 5 einen quer zur Schwenkachse I schiebeverstellbaren Schlitten 7 aufweisen, um durch ein Seitenverstellen der Ladeeinheiten 2 den Verladebereich ausdehnen zu können. Außerdem ist es möglich, wie in Fig. 2 gezeigt, die Konsolen 3 mit einem um eine liegende Querachse II umklappbaren Oberbau 8 zur Aufnahme der Teleskopsäule 4 und der Stellzylinder 5 auszustatten, um zur Verringerung der Transporthöhe des unbeladenen Fahrzeuges die hochragenden Teile umzuklappen (strichlierte Darstellung). Dabei kann der Oberbau gegebenenfalls in nicht weiter dargestellter Weise zusätzlich zur Teleskopsäule auch die Stützfüße 6 aufnehmen, so daß die gesamten Ladeeinheiten umklappbar sind.

Die Teleskopsäule 4 besteht, wie insbesondere aus Fig. 3 hervorgeht, aus einem auf der Konsole 3 angelenkten Unterteil 9, an dem über geeignete Anschlußplatten 10 die Stellzylinder 5 angreifen, aus einem im Unterteil 9 verschiebbar geführten Oberteil 11, der am freien Ende einen Säulenkopf 12 trägt, einem innerhalb des Oberteils 11 verschiebbar eingesetzten Gleitstück 13, an dem um eine zur Schwenkachse I parallele Schwenkachse III schwenkverstellbar eine Auslegerarm 14 mit einem Widerlager 15 zum Anschluß eines Lastaufnahmemittels 16, beispielsweise eines Traggeschirrs zur Aufnahme eines Containers, angelenkt ist, sowie aus einem Säulenzylinder 17, der sich einerseits am Unterteil 9 bzw. an der Schwenkachse I abstützt und der anderseits am Gleitstück 13 angreift, das bis zu einem nicht weiter dargestellten Endanschlag aus dem Oberteil 11 bis in den Säulenkopf 12 hochschiebbar ist. Der Säulenkopf 12 bildet eine schlitzförmige Schwenkführung 18 für den Auslegerarm 14, wobei der Schwenkbereich durch seitliche Kurvenbahnen 19 begrenzt wird. Der Auslegerarm 14 ist mit den Kurvenbahnen 19 zugeordneten Führungsgliedem, beispielsweise mit um eine zur Anlenkachse III parallele Drehachse IV drehbaren Führungsrollen 20 ausgerüstet, welche Führungsrollen 20 im Durchmesser an die im Mündungsbereich des Oberteils 11 zur Schwenkführung 18 des Säulenkopfes 12 hin vorgesehene Engstelle 21 zwischen den beiden Kurvenbahnen 19 angepaßt sind, so daß sich bei einem Einwärtsziehen des Gleitstückes 13 der Auslegerarm 14 in eine zur Teleskopsäule 4 gestreckte Lage ausrichten läßt.

Der Säulenkopf 12 bildet einen mittigen Sperransatz 22, dem ein Sperriegel 23 des Auslegerarms 14 als Umschlagsicherung zugehört, wobei der Sperriegel 23 beispielsweise als doppelt beaufschlagbarer Sperrzylinder 24 zum wahlweisen Ver- und Entriegeln ausgebildet ist.

Am Unterteil 9 der Teleskopsäule 4 ist eine Verriegelungsvorrichtung 25 angeordnet, die aus zwei voneinander in Säulenlängsrichtung beabstandeten Riegelkämmen 26, 27 und einem über Schwenkhebel 28 an den beiden Verriegelungskämmen angelenkten Betätigungszylinder 29 besteht, so daß durch die Betätigung des Betätigungszylinders 29 beide Verriegelungskämme 26, 27 ausgerückt oder abwechselnd der eine oder andere in seine Verriegelungsstellung eingerückt werden können. In den Verriegelungsstellungen ragen die Riegelkämme durch entsprechende Öffnungen in den Unterteil 9 hinein und untergreifen den Oberteil 11 in einer mittleren bzw. oberen Ausfahrstellung, wobei durch einen Formschluß zwischen den Riegelkämmen und dem Oberteil oder eine entsprechend schwache Dimensionierung des Betätigungszylinders 29 ein Entriegeln bei belastetem Oberteil nicht möglich ist.

Die erfindungsgemäßen Ladeeinheiten 2 erlauben nicht nur ein Aus- und Einfahren bzw. ein Verschwenken der Teleskopsäule 4, sondern auch ein Schwenkverstellen des Auslegerarms 14 und auch ein Umschwenken dieses Auslegerarms 14 unter Last, so daß sich ein breiter Einsatzbereich mit den unterschiedlichsten Verlademöglichkeiten ergibt. So läßt sich beispielsweise, wie in Fig. 1 angedeutet, ein Container C von einer erhöhten Ladefläche L abnehmen oder auf eine solche erhöhte Ladefläche L abstellen, es ist ein Umladen des Containers C von einer Fahrzeugseite auf die andere und ein Abstellen am Boden, aber auch ein Aufeinanderstapeln zweier Container C möglich. Darüber hinaus lassen sich die Ladeeinheiten 2 in eine Transportstellung bringen, die, wie ebenfalls in Fig. 1 angedeutet, innerhalb der Außenkontur eines aufgeladenen Containers C Platz findet.

Die Seitenschwenkbewegungen der Teleskopsäule 4 werden über die Stellzylinder 5 vorgenommen, wobei unabhängig von den Schwenklagen der innere Säulenzylinder 17 zum Schwenkverstellen des Auslegerarms 14 oder zum Aus- und Einfahren des Oberteils 11 betätigt werden kann. Wird beispielsweise der Säulenzylinder 17 in der in Fig. 3 dargestellten Lage, die einer ersten Ausfahrstellung des Oberteils mit einer Verriegelung durch den unteren Verriegelungskamm 26 entspricht, im Ausfahrsinn beaufschlagt, wird das Gleitstück 13 hochbewegt und damit der Auslegerarm 14 unter Abrollen der Führungsrollen 20 entlang der Kurvenbahn 19 seitlich ausgeschwenkt, wobei durch ein seitliches Schwenkverstellen der Teleskopsäule 4 die Auslageweite vergrößert werden kann. Wird der Säulenzylinder 17 eingefahren, erfolgt auf Grund der Verriegelung des Oberteils 11 ein Hochschwenken des Auslegerarms 14 in Richtung Strecklage, bis der Sperriegel 23 am Sperransatz 22 anliegt, was ein ungewolltes Umschlagen des Auslegerarms 14 verhindert. Werden die Sperriegel 23 entriegelt, kann durch ein weiteres Rückziehen des Säulenzylinders 17 das Gleitstück 13 bis zur Strecklage des Auslegerarms 14 in den Oberteil 11 eingezogen werden, wobei die Führungsrollen 20 im Bereich der Engstelle 21 nun gleichzeitig an beiden Kurvenbahnen 19 anliegen und die Mittellage des Auslegerarms 14 stabilisieren. Ist während dieses Einholvorganges oder nach dem Erreichen der Strecklage die Teleskopsäule 4 von der einen Seite auf die andere übergeschwenkt, kann nun bei einem Hochschieben des Gleitstückes 13 mittels des Säulenzylinders 17 der Auslegerarm 14 mit seinen Führungsrollen 20 entlang der anderen Führungsbahn 19 auf die andere Seite umschwenken und die aufgenommene Last bei seiner Schwenkbewegung mitnehmen. Ist der Umschwenkvorgang beendet und hat beim Ausfahren des Säulenzylinders 17 das Gleitstück 13 seinen Endanschlag erreicht, wird bei weiterer Beaufschlagung des Säulenzylinders 17 zusammen mit dem Gleitstück 13 der Oberteil 11 ausgefahren, was zu einer Erhöhung der Teleskopsäule 4 führt. Sobald der Oberteil die Verriegelungsvorrichtung 25 entlastet, läßt sich der Verriegelungskamm 26 herausziehen und gegebenenfalls nach einem entsprechenden Ausfahren des Oberteils 11 der höherliegende Verriegelungskamm 27 einsetzen, so daß nun in einer weiteren Ausfahrstellung, beispielsweise in einer Stapelposition, durch ein Zurückziehen des Säulenzylinders 17 wiederum der Auslegerarm 14 schwenkverstellt werden kann.

## Patentansprüche

1. Verladevorrichtung für Container (C) od. dgl. mit einem Paar auf einem Fahrgestell aufbaubarer Ladeeinheiten (2), die jeweils eine um eine gemeinsame, in Längsmitte des Fahrgestells verlaufende Schwenkachse (I) schwenkverstellbar an einer Konsole (3) abgestützte Teleskopsäule (4) aus einem an der Konsole (3) angelenkten Unterteil (9), einem im Unterteil (9) verschiebbar geführten Oberteil (11) und einem den Oberteil (11) gegenüber dem Unterteil (9) schiebeverstellbaren Säulenzylinder (17) aufweisen, wobei beidseits am Unterteil (9) Stellzylinder (5) angreifen und der Oberteil (11) einen um eine zur Teleskopsäulenschwenkachse (I) parallele Schwenkachse (III) nach beiden Seiten schwenkverstellbaren Auslegerarm (14) mit einem Wderlager zum Anschluß eines Lastaufnahmemittels aufnimmt, **dadurch gekennzeichnet, daß** der Oberteil (11) einen Säulenkopf (12) trägt, der eine schlitzförmige Schwenkführung (18) mit den Schwenkbereich beidseits begrenzenden Kurvenbahnen (19) für den Auslegerarm (14) bildet, daß der Auslegerarm (14) den Kurvenbahnen (19) zugeordnete Führungsglieder (20) aufweist und mit einem Gleitstück (13) gelenkig verbunden ist, das verschiebbar innerhalb des zur Schwenkführung (18) des Säulenkopfes (12) hin offen ausmündenden Oberteils (11) sitzt, wobei im Mündungsbereich eine Engstelle (21) zwischen den Kurvenbahnen (19) zum gleichzeitigen Anliegen der Führungsglieder (20) des in einer zur Teleskopsäule (4) gestreckten Lage ausgerichteten Auslegerarms (14) an beiden Kurvenbahnen (19) vorgesehen ist, und daß der Säulenzylinder (17) oberteilseitig am anschlagbegrenzt hochschiebbaren Gleitstück (13) angreift.

2. Verladevorrichtung nach Anspruch 1, **dadurch gekennzeichnet, daß** der Unterteil (9) der Teleskopsäule (4) mit einer Verriegelungsvorrichtung (25) zum wahlweisen Verriegeln des Oberteils (11) in ein oder mehreren Ausfahrstellungen ausgerüstet ist.

3. Verladevorrichtung nach Anspruch 1 oder 2, **dadurch gekennzeichnet, daß** der Auslegerarm (14) als Führungsglied eine um eine zur Auslegerarmschwenkachse (III) parallele Drehachse (IV) drehbar gelagerte Führungsrolle (20) aufweist, die einen an die Engstelle (21) zwischen den Kurvenbahnen (19) angepaßten Durchmesser besitzt.

4. Verladevorrichtung nach einem der Ansprüche 1 bis 3, **dadurch gekennzeichnet, daß** der Auslegerarm (14) mit einem einem Sperransatz (22) des Säulenkopfes (12) zugeordneten Sperriegel (23) als Umschlagsicherung ausgestattet ist.

5. Verladevorrichtung nach einem der Ansprüche 1 bis 4, **dadurch gekennzeichnet, daß** die Teleskopsäule (4) samt den Stellzylindern (5) auf einem quer zur Schwenkachse (I) schiebeverstellbaren Schlitten (7) der Konsole (3) aufgesetzt ist.

6. Verladevorrichtung nach einem der Ansprüche 1 bis 5, **dadurch gekennzeichnet, daß** die Konsole (4) einen um eine liegende Querachse (II) umklappbaren Oberbau (8) aufweist, der die Teleskopsäule (4) samt den Stellzylindern (5) trägt.

## Claims

1. A device for loading containers (C) or the like, comprising a pair of loading units (2) for mounting on an undercarriage, each unit comprising a telescopic column (4) mounted on a bracket (3) and pivotable around a common axis (1) extending in the longitudinal centre of the undercarriage, the column having a lower part (9) pivoted to the bracket (3), an upper part (11) guided for movement in the lower part (9), and cylinders (17) for sliding the upper part (11) relative to the lower part (9), wherein adjusting cylinders (5) engage the lower part (9) on both sides and the upper part (11) receives an extension arm (14) pivotable on both sides around an axis (III) parallel to the pivot axis (1) of the telescopic columns and comprising an abutment for connecting to a load-receiving means, **characterised in that** the upper part (11) bears a column head (12) which forms a slotted pivot guide (18) with curved tracks (19) bounding the extent to which the extension arm (14) can be pivoted on both sides, **in that** the extension arm (14) has guide elements (20) associated with the curved tracks (19) and is pivotably connected to a sliding member (13) slidable inside the upper part (11), which opens out towards the guide (18) for the pivoting of the column head (12), wherein a constriction (21) between the curved tracks (19) is provided in the mouth region so that the guide elements (20) of the extension arm (14) aligned in a stretched position relative to the telescopic column (4) can simultaneously lie against both curved tracks (19), and **in that** the top of the column cylinders (17) engages a sliding member (13) movable upwards to an extent limited by a stop.

2. A loading device according to claim 1, **characterised in that** the lower part (9) of the telescopic column (4) is equipped with a locking device (25) for locking the upper part (11) in one or more extended positions as required.

3. A loading device according to claim 1 or 2, **characterised in that** the extension arm (14) has a guide element in the form of a guide roller (20) mounted for rotation around an axis (IV) parallel to the pivot axis (III) of the extension arm and having a diameter adapted to the constriction (21) between the curved tracks (19).

4. A loading device according to any of claims 1 to 3, **characterised in that** the extension arm (14) is equipped with an overturn-preventing means in the form of a locking bar (23) associated with a locking attachment (22) on the column head (12).

5. A loading device according to any of claims 1 to 4, **characterised in that** the telescopic column (4) and the adjusting cylinders (5) are mounted on the bracket (3) on slides (7) slidable transversely of the pivot axis (I).

6. A loading device according to any of claims 1 to 5, **characterised in that** the bracket (4) has an upper structure (8) foldable around a horizontal transverse axis (II) and bearing the telescopic column (4) and the adjusting cylinders (5).

## Revendications

1. Dispositif de chargement pour des conteneurs (C) ou analogues, avec une paire d'unités de chargement (2), pouvant être montées sur un châssis mobile, qui présentent chacun une colonne télescopique (4) prenant appui sur une console (3), de façon réglable en pivotement autour d'un axe de pivotement (I) s'étendant dans l'axe longitudinal d'un châssis, colonne télescopique constituée d'une partie inférieure (9) articulée à la console (3), d'une partie supérieure (11) guidée de façon déplaçable dans la partie inférieure (9), et d'un vérin de colonne (17) réglable en faisant coulisser la partie supérieure (11) par rapport à la partie inférieure (9), des vérins de réglage (5) agissant des deux côtés sur la partie inférieure (9) et la partie supérieure (11) supportant un bras articulé (14) réglable en pivotement, des deux côtés, autour d'un axe de pivotement (III) parallèle à l'axe de pivotement (I) de la colonne télescopique, bras articulé comportant un contre-appui pour le raccordement d'un moyen support de charge, **caractérisé en ce que** la partie supérieure (11) porte une tête de colonne (12) qui présente un guidage pivotant (18) en forme de fente avec des pistes courbes (19), délimitant des deux côtés la plage de pivotement, pour le bras articulé (14), **en ce que** le bras articulé (14) présente des organes de guidage (20) associés aux pistes courbes (19) et est relié de façon articulée à une pièce de glissement (13) qui est montée de façon déplaçable à l'intérieur de la partie supérieure (11) ouverte pour assurer le guidage en pivotement (18) de la tête de colonne (12), dans la zone d'embouchure étant prévue un point étroit (21) entre les pistes courbes (19), pour obtenir un appui simultané des organes de guidage (20) du bras articulé (14), orienté en une position étendue par rapport à la colonne télescopique (4), sur les deux pistes courbes (19), et **en ce que** le vérin de colonne (17) agit du côté de la partie supérieure sur la pièce de glissement (13) relevable par coulissement, d'une façon limitée par des butées.

2. Dispositif de chargement selon la revendication 1, **caractérisé en ce que** la partie inférieure (9) de la colonne télescopique (4) est équipée d'un dispositif de verrouillage (25), pour verrouiller au choix la partie supérieure (11) dans une ou plusieurs positions de déploiement.

3. Dispositif de chargement selon la revendication 1 ou 2, **caractérisé en ce que** le bras articulé (14) présente, à titre d'organe de guidage, un galet de guidage (20) monté à rotation autour d'un axe de rotation (IV) parallèle à l'axe de pivotement (III) du bras articulé, galet ayant un diamètre adapté au point étroit (21) entre les pistes courbes (19).

4. Dispositif de chargement selon l'une des revendications 1 à 3, **caractérisé en ce que** le bras articulé (14) est équipé d'un verrou de blocage (23) associé à un appendice de blocage (22) de la tête de colonne (12), le verrou faisant office de sécurité de rabattement ou renversement.

5. Dispositif de chargement selon l'une des revendications 1 à 4, **caractérisé en ce que** la colonne télescopique (4) avec les vérins de réglage (5) est installée sur un chariot (7), déplaçable par coulissement par rapport à l'axe de pivotement (I), de la console (3).

6. Dispositif de chargement selon l'une des revendications 1 à 5, **caractérisé en ce que** la console (4) présente une superstructure (8) rabattable autour d'un axe transversal (II) horizontal, la superstructure portant la colonne télescopique (4) avec les vérins de réglage (5).
